# EUROPEAN PATENT APPLICATION

(11) **EP 1 835 713 A1**
(43) Date of publication of application: **19.09.2007**
(21) Application number: 07103328.6
(22) Date of filing: 01.03.2007
(51) Int. Cl.: H04N 1/00

(54) **Image forming system, image forming apparatus, and image forming method**

(30) Priority: 15.03.2006 JP 2006071735
(71) Applicant: Ricoh Company, Ltd., Tokyo 143-8555 (JP)
(72) Inventor: Toda, Katsuyuki, Ohta-ku Tokyo 143-8555 (JP)
(74) Representative: Schwabe - Sandmair - Marx

(57) **Abstract**

An image forming system includes an external device (20) that stores therein an image, and an image forming apparatus (10) that is directly connected to the external device (20) and outputs the image. The image forming apparatus (10) includes an fetching unit (100) that fetches the image from the external device (20); a receiving unit (108) that receives information about an output format of the image, and number of copies to be output; and an image output unit (110) that outputs, when the number of copies is multiple, the number of copies of the image in the output format received by the receiving unit (108).

## Description

### CROSS-REFERENCE TO RELATED APPLICATIONS

The present document incorporates by reference the entire contents of Japanese priority document, 2006-071735 filed in Japan on March 15, 2006.

### BACKGROUND OF THE INVENTION

### 1. Field of the Invention

The present invention relates to an image forming system that is directly connected to an external device, an image forming apparatus, an image forming system that includes the image forming apparatus, an and image forming method.

### 2. Description of the Related Art

Digital cameras have become very popular, for it is a very easy way to take (create) images. Images are stored in a memory card or the like of the digital camera. When printing or processing an image present in a memory card of a digital camera, the image is first downloaded in a memory of a personal computer (PC), an application that enables to view or process the image is launched, and finally the image is output to a printer that is connected to the PC via a printer driver.

In this manner, when printing the image, it is necessary to transfer the image from the digital camera to the printer. Moreover, it is necessary to perform setting of an application that enables to print the image and perform setting of the printer driver. An operation to transfer the image is cumbersome to a user. Moreover, the process of performing setting of an application is difficult for a user not well acquainted with PCs or applications.

Direct printing systems have been known in which a digital camera is directly connected to a printer. A direct printing system enables a user to print an image present in a memory card of a digital camera directly, i.e., without using a PC. Such a direct printing system has been disclosed in, for example, Japanese Patent Application Laid-open No. 2004-64740).

A direct print is a common communication command in all companies. Complex print instructions are not included in functions that are realized by using the communication command, and output is enabled only for limited functions compared to the functions related to an output from the PC. Moreover, the printer and the digital camera need to be compatible for adding new functions. Due to this, the companies, including competitors, are not able to realize new functions.

For example, multiple copies of one image can be easily printed using either a PC or a direct printing system. However, printing multiple images on one paper, or printing multiple copies of an index print can not be specified in the direct printing system. Due to this, when printing multiple copies of such edited images, the user needs to repeatedly issue an output instruction for number of times equal to the desired number of copies. Thus, a printing operation is highly inefficient.

The direct print is the standard that is essentially created to output photographs. Business purposes such as index printing and distribution of consolidated output results are not considered during creation of the direct print. Thus, currently such requirements can only be met by using the output from the PC.

### SUMMARY OF THE INVENTION

It is an object of the present invention to at least partially solve the problems in the conventional technology.

According to an aspect of the present invention, an image forming system includes an external device that stores therein an image; and an image forming apparatus that is directly connected to the external device and outputs the image. The image forming apparatus includes an image fetching unit that fetches the image from the external device; a receiving unit that receives information about an output format of the image, and number of copies to be output; and an image output unit that outputs, when the number of copies is multiple, the number of copies of the image in the output format received by the receiving unit.

According to another aspect of the present invention, an image forming apparatus that is directly connected to an external device and that outputs an image includes a fetching unit that fetches the image from the external device; a receiving unit that receives information about an output format of the image, and number of copies to be output; and an image output unit that outputs, when the number of copies is multiple, the number of copies of the image in the output format received by the receiving unit.

According to still another aspect of the present invention, a method of forming an image in an image forming apparatus that is connected to an external device and that outputs the image includes fetching the image from the external device; receiving information about an output format of the image, and number of copies to be output; and outputting, when the number of copies is multiple, the number of copies of the image in the output format received at the receiving.

The above and other objects, features, advantages and technical and industrial significance of this invention will be better understood by reading the following detailed description of presently preferred embodiments of the invention, when considered in connection with the accompanying drawings.

### BRIEF DESCRIPTION OF THE DRAWINGS

Fig. 1 is a schematic of an image forming system 1 according to a first embodiment of the present invention;
Fig. 2 is a functional block diagram of a direct printer and a digital still camera shown in Fig. 1;
Fig. 3 is an example of contents of print setting data;
Fig. 4 is a flowchart of an image forming process performed by the direct printer shown in Fig. 2;
Fig. 5 is a block diagram of a hardware structure of the direct printer shown in Fig. 2; and
Fig. 6 is a flowchart of an image forming process performed by a direct printer according to a second embodiment of the present invention.

### DETAILED DESCRIPTION OF THE PREFERRED EMBODIMENTS

Exemplary embodiments of the present invention are explained in detail below with reference to the accompanying drawings.

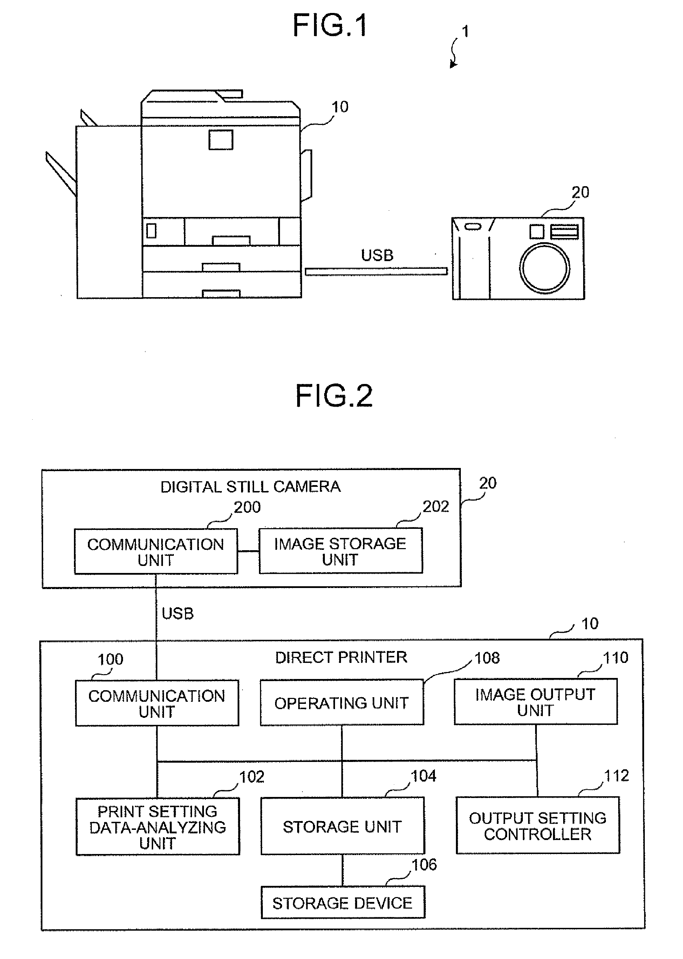

Fig. 1 is a schematic of an image forming system 1 according to a first embodiment of the present invention. The image forming system 1 includes a digital still camera 20, which is an external device, and a direct printer 10. The digital still camera 20'is directly connected to the direct printer 10 via a Universal Serial Bus (USB). The direct printer 10 is used to directly print an image taken by the digital still camera 20. The direct printer 10 employs a specific communication format to perform direct printing.

Fig. 2 is a functional block diagram of the direct printer 10 and the digital still camera 20. The direct printer 10 includes a communication unit 100, a print setting data-analyzing unit 102, a storage unit 104, a storage device 106, an operating unit 108, an image output unit 110, and an output setting controller 112.

The communication unit 100 communicates with the digital still camera 20 via the USB. The print setting data-analyzing unit 102 receives, from the digital still camera 20, an image file, an image file identifier (ID) that is unique to the image file, and print setting data related to a printing process to be performed on the image file. The print setting data-analyzing unit 102 transmits, to the digital still camera 20, print capacity data of the direct printer 10. The storage unit 104 stores, in the storage device 106, data fetched by the communication unit 100. The operating unit 108 receives a specification from a user via a user interface (UI) (not shown). For example, the user specifies number of copies and an output format of the image. The output format is an edited format of the image such as an output of multiple images on a single sheet medium.

The image output unit 110 outputs (prints) the specified image on a sheet medium such as a paper. If multiple copies are specified, the image output unit 110 outputs multiple copies of the same image. Further, the image output unit 110 can output multiple copies of an edited image such as outputting two images on the single sheet medium.

By using the print setting data fetched by the print setting data-analyzing unit 102 and the specification received by the operating unit 108, the output setting controller 112 controls the image output unit 110. To be specific, the output setting controller 112 exercises control for outputting a predetermined image file for a predetermined number of print copies. Further, the output setting controller 112 also exercises control for outputting the edited image for a predetermined number of print copies.

The digital still camera 20 includes a communication unit 200 and an image storage unit 202. The communication unit 200 communicates with the communication unit 100 of the direct printer 10 via the USB. The image storage unit 202 is a recording device such as a memory card.

A communication process is established by an application for the direct print that is installed in both the direct printer 10 and the digital still camera 20 when the direct printer 10 and the digital still camera 20 are connected to each other. Next, the print setting data-analyzing unit 102 transmits, to the digital still camera 20, the print capacity data of components that are included in the direct printer 10.

Based on the print capacity data, the digital still camera 20 transmits the print setting data that carries out a printing operation according to printing conditions that are set in the direct printer 10 and the digital still camera 20. Regardless of a manufacturer, the communication process enables the direct print due to the direct connection between the direct printer 10 and the digital still camera 20.

The user operates a UI (not shown) of the digital still camera 20 and selects an image for output. Upon specifying a selection of a sheet size, a layout, and settings of print quality at the time of output, the user executes a print instruction.

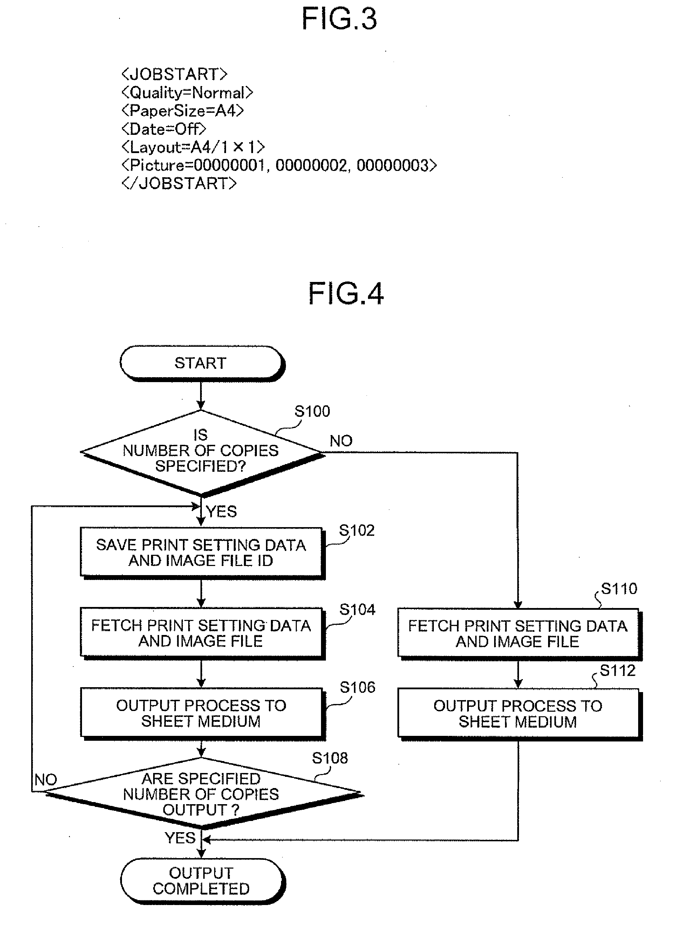

The digital still camera 20 notifies the direct printer 10 of the print setting data and the image file ID that is subjected to an output instruction. Based on the print setting data, the direct printer 10 carries out output control and tray selection. Based on the image file ID, the direct printer 10 fetches each image file from the digital still camera 20, decodes the image data, and carries out an imaging process. Fig. 3 is an example of contents of the print setting data. The direct print is generally disclosed in Japanese Patent Application Laid-open No. 2004-64740.

Fig. 4 is a flowchart of an image forming process performed by the direct printer 10. Upon receiving the specification for number of copies from the user (Yes at step S100), the operating unit 108 stores the print setting data and the image file ID in the storage device 106 (step S102). Next, based on the print setting data, the operating unit 108 fetches from the digital still camera 20, the image file that is specified by the image file ID for output (step S104). For example, when printing two images on a single sheet medium, the operating unit 108 fetches the image files of the two images.

Next, due to control based on the print setting data, the image output unit 110 outputs the predetermined image on the sheet medium (step S106). Repeating a process described at steps S102 to S106 for number of times equal to the specified number of copies (Yes at step S108) enables to get the specified number of copies of the printed image.

If number of copies is not specified (No at step S100), the operating unit 108 fetches the print setting data and the image file for printing (step S110) and the image output unit 110 outputs the fetched image on the sheet medium (step S112), thus completing the image forming process performed by the direct printer 10.

Because only the image file ID are stored in the storage device 106 and the image files are fetched at the time of output, the storage device 106 can have less storage capacity.

Multiple images can be output on the single sheet medium by reading the image file of each of the images. Further, printing multiple number of copies of such an edited image can also be specified. Similarly, printing multiple number of copies of the edited image in index printing etc. can also be specified. When printing multiple number of copies of the edited image, the user needs to repeatedly issue the output instruction only for number of times equal to the desired number of printed copies. Thus, work efficiency can be enhanced.

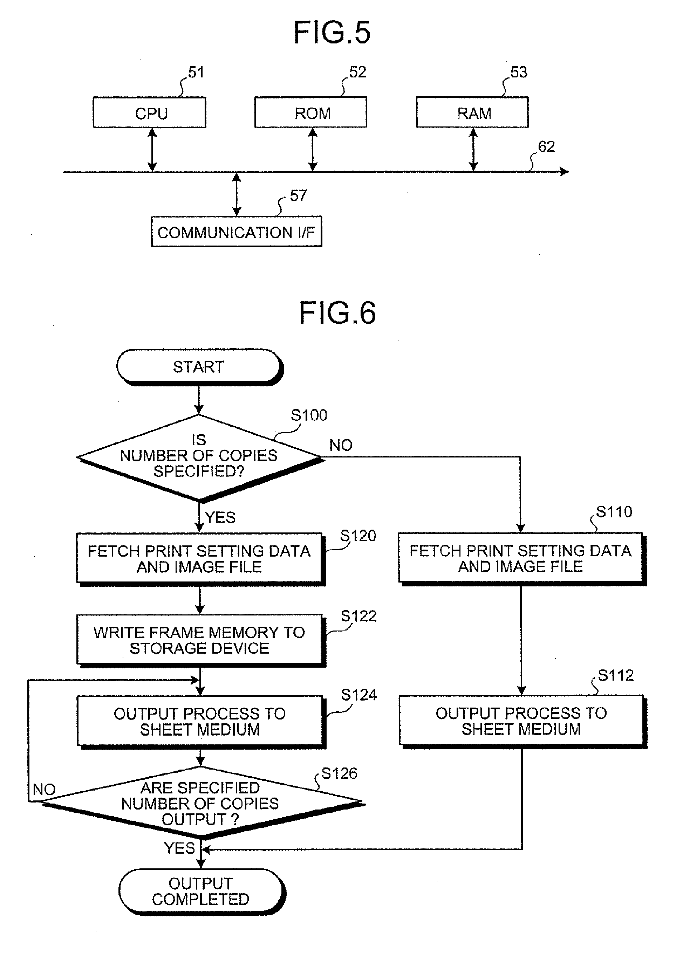

Fig. 5 is a block diagram of a hardware structure of the direct printer 10. The direct printer 10 includes a read only memory (ROM) 52 that stores therein an image-forming program that executes the image forming process in the direct printer 10, a central processing unit (CPU) 51 that controls the components of the direct printer 10 according to computer programs inside the ROM 52, a random access memory (RAM) 53 that stores therein various data that is necessary to control the direct printer 10, a communication interface (I/F) 57 that communicates by connecting the direct printer 10 to a network, and a bus 62 that connect the components of the direct printer 10.

A computer program that causes the direct printer 10 to operate can also be stored as an installable or an executable file in a computer readable recording medium such as a compact disk-read only memory (CD-ROM), a floppy (registered trademark) disk (FD), a digital versatile disk (DVD) etc. and provided.

The computer program is read from the recording medium in the direct printer 10 and executed, thus loading the computer program on a main storage device. Each component that is explained in a software structure mentioned earlier is generated on the main storage device.

The computer program can also be stored in a computer that is connected to the network such as the Internet and provided by downloading the image-forming program via the network.

Although the present invention is explained with reference to specific embodiments, additional advantages and modifications can also be carried out.

The storage device 106 can be a high capacity storage device such as a hard disk drive (HDD). The storage device 106 stores therein internal data such as a frame memory of all the pages that are output in a job.

To be specific, based on the print setting data that is received from the digital still camera 20 at the time of the output instruction by the image output unit 110, the direct printer 10 decides a page size and a resolution. Further, based on the image file ID, the direct printer 10 carries out decoding and imaging process on the image file to store in the storage device 106, the internal data such as the frame memory of all the pages that are output in the job. At the time of image output, the direct printer 10 uses the internal data that is stored in the storage device 106 to carry out an output process for number of times equal to the specified number of print copies to output the multiple copies.

Fig. 6 is a flowchart of an image forming process performed by the direct printer 10 where the storage device 106 is a high capacity storage device. If number of copies is specified (Yes at step S100), the direct printer 10 fetches the print setting data and the image file (step S120). Next, the direct printer 10 carries out the imaging process on the frame memory and writes the frame memory to the storage device 106 (step S122). Next, the direct printer 10 outputs the image on the sheet medium (step S124). The direct printer 10 repeats a process described at steps S120 to S124 for number of times equal to the specified number of copies (Yes at step S126), thereby printing the specified number of prints.

Because fetching the image file and the imaging process on the frame memory are carried out only once, a communication cost can be reduced. Further, because the direct printer 10 receives all the image files from the digital still camera 20 at step S120, the desired images can be output even if a communication with the digital still camera 20 is subsequently disconnected.

In another example of the direct printer, data stored in the storage device 106 can also be deleted after completion of the output process. The data can also be deleted automatically. In yet another example of the direct printer, the data can also be automatically deleted upon switching off the power supply.

Data such as the image files etc. can also be continuously stored in the storage device 106 after completion of the output process, and the stored data can be reused.

According to an embodiment of the present invention, an image-fetching unit fetches an image from an external device. An output format specification-receiving unit receives a specification of an output format of the image. An output copy number specification-receiving unit receives a specification of an output copy number. Upon the output copy number specification-receiving unit receiving the specification of a multiple copy number, an image output unit outputs the specified number of copies of the image in the output format received by the output format specification-receiving unit. Thus, convenience can be enhanced.

According to an embodiment of the present invention, an image identification data-fetching unit fetches image identification data that identifies the image. Upon the output copy number specification-receiving unit receiving the specification of the multiple copy number, based on the image identification data fetched by the image identification data-fetching unit, the image output unit fetches the image for output. Thus, by fetching only the necessary image, process efficiency can be enhanced.

According to an embodiment of the present invention, an image storage unit stores therein the image for output by the image output unit and the image output unit outputs the image that is stored in the image storage unit. Thus, fetching and maintaining only the necessary image can enhance process efficiency.

According to an embodiment of the present invention, after the image output unit outputs the image, a deleting unit deletes the image that is stored in the image storage unit. Thus, convenience of a device having a smaller storage capacity can also be enhanced.

According to an embodiment of the present invention, upon the output copy number specification-receiving unit receiving the multiple copy number, the image-fetching unit fetches the image for number of times corresponding to the multiple copy number, the image output unit outputs the image at every instance of the image-fetching unit fetching the image, and the deleting unit deletes the image stored in the image storage unit at every instance of the image output unit outputting the image. Thus, convenience of the device having a smaller storage capacity can also be enhanced.

According to an embodiment of the present invention, the image-fetching unit fetches the image from the external device. The output format specification-receiving unit receives the specification of the output format of the image. The output copy number specification-receiving unit receives the specification of the output copy number. Upon the output copy number specification-receiving unit receiving the specification of the multiple copy number, the image output unit outputs the specified number of copies of the image in the output format received by the output format specification-receiving unit. Thus, convenience can be enhanced.

According to an embodiment of the present invention, the image is fetched from the external device, the specification of the output format of the image is received, the specification of the output copy number is received, and upon receiving the specification of the multiple copy number, the specified multiple number of copies of the image are output in the received output format. Thus, convenience can be enhanced.

According to an embodiment of the present invention, the image is fetched from the external device, the specification of the output format of the image is received, the specification of the output copy number is received, and upon receiving the specification of the multiple copy number, the specified multiple number of copies of the image are output in the received output format. Thus, convenience can be enhanced.

According to an embodiment of the present invention, the image is fetched from the external device, the specification of the output format of the image is received, the specification of the output copy number is received, and upon receiving the specification of the multiple copy number, the specified multiple number of copies of the image are output in the received output format. Thus, convenience can be enhanced.

Although the invention has been described with respect to a specific embodiment for a complete and clear disclosure, the appended claims are not to be thus limited but are to be construed as embodying all modifications and alternative constructions that may occur to one skilled in the art that fairly fall within the basic teaching herein set forth.

## Claims

1. An image forming system comprising:
an external device (20) that stores therein an image; and
an image forming apparatus (10) that is directly connected to the external device (20) and outputs the image, wherein the image forming apparatus (10) includes
a fetching unit (100) that fetches the image from the external device (20);
a receiving unit (108) that receives information about an output format of the image, and number of copies to be output; and
an image output unit (110) that outputs, when the number of copies is multiple, the number of copies of the image in the output format received by the receiving unit (108).

2. The image forming system according to claim 1, wherein the fetching unit (100) fetches
fetches an image identifier unique to the image, and
fetches, when the number of copies is multiple, an image that corresponds to the image identifier.

3. The image forming system according to claim 2, wherein the image forming apparatus (10) further includes a storing unit (106) that stores therein the image fetched by the fetching unit (100), wherein the image output unit (110) reads the image from the storing unit when outputting the image.

4. The image forming system according to claim 3, wherein the image forming apparatus (10) further includes a deleting unit that deletes, after the image output unit (110) has output the image, the image from the storing unit (106).

5. The image forming system according to claim 4, wherein
the fetching unit (100) fetches, when the number of copies is multiple, the image for number of times corresponding to the multiple copy number,
the image output unit (110) outputs the image at every instance the fetching unit (100) fetches the image, and
the deleting unit deletes, at every instance the image output unit (110) outputs the image, the image in the storing unit (106).

6. An image forming apparatus (10) that is directly connected to an external device (20) and that outputs an image, the image forming apparatus (10) comprising:
an fetching unit (100) that fetches the image from the external device (20);
a receiving unit (108) that receives information about an output format of the image, and number of copies to be output; and
an image output unit (110) that outputs, when the number of copies is multiple, the number of copies of the image in the output format received by the receiving unit (108).

7. The image forming apparatus according to claim 6, wherein the fetching unit (100)
fetches an image identifier unique to the image, and
fetches, when the number of copies is multiple, an image that corresponds to the image identifier.

8. The image forming apparatus according to claim 7, further comprising a storing unit (106) that stores therein the image fetched by the fetching unit (100), wherein the image output unit (110) reads the image from the storing unit (106) when outputting the image.

9. The image forming apparatus according to claim 8, further comprising a deleting unit that deletes, after the image output unit (110) has output the image, the image from the storing unit (106).

10. The image forming apparatus according to claim 9, wherein
the fetching unit (100) fetches, when the number of copies is multiple, the image for number of times corresponding to the multiple copy number,
the image output unit (110) outputs the image at every instance the fetching unit (100) fetches the image, and
the deleting unit deletes, at every instance the image output unit (110) outputs the image, the image in the storing unit (106).

11. A method of forming an image in an image forming apparatus that is connected to an external device and that outputs the image, the method comprising:
fetching the image from the external device;
receiving information about an output format of the image, and number of copies to be output; and
outputting, when the number of copies is multiple, the number of copies of the image in the output format received at the receiving.

12. The method according to claim 11, wherein the fetching includes
fetching an image identifier unique to the image; and
fetching, when the number of copies is multiple, an image that corresponds to the image identifier.

13. The method according to claim 12, further comprising storing the image fetched by the fetching unit in a storing unit, wherein the outputting includes reading the image from the storing unit when outputting the image.

14. The method according to claim 13, further comprising deleting, after the image output unit has output the image, the image from the storing unit.

15. The method according to claim 14, wherein
the fetching includes fetching, when the number of copies is multiple, the image for number of times corresponding to the multiple copy number,
the outputting includes outputting the image at every instance the image is fetched at the fetching, and
the deleting includes deleting, at every instance the image is output at the outputting, the image in the storing unit.
